# EUROPEAN PATENT APPLICATION

(11) **EP 1 622 404 A1**
(43) Date of publication of application: **01.02.2006**
(21) Application number: 04291968.8
(22) Date of filing: 30.07.2004
(51) Int. Cl.: H04Q 7/28, H04Q 7/22

(54) **Method of communicating by means of direct speech**

(71) Applicant: ALCATEL, 75008 Paris (FR)
(72) Inventor: Kopp, Dieter, 75428 Illingen (DE)
(74) Representative: Kohler Schmid Möbus

(57) **Abstract**

The invention relates to a method for communicating by means of direct speech between the user terminals of two or several users of a push-to-talk service over a telecommunications network, wherein information about whether a user is willing and/or able to accept direct speech is stored in a presence server. Direct speech is only directed to an addressed user terminal if in the presence server the addressed user terminal is declared as willing and able to accept direct speech. Otherwise direct speech is directed to a speech recognition system and translated into text. A text identification comprising the text is sent to the addressed user terminal, where it is indicated allowing the user to decide whether to accept, forward or reject the direct speech.

## Description

### Background of the invention

The invention relates to a method of communicating by means of direct speech between the user terminals of two or more users of a push-to-talk service via a network, wherein the user of a first terminal pushes a key and inputs speech to be transmitted to at least one addressed terminal using the push-to-talk service.

A push-to-talk service (PTT), also called push-over-cellular (POC) offers a voice communication service based on an "always-on" connection between two individuals or between groups of recipients as in a group chat session, which allows to start calls just by pushing a key. These services only offer direct speech between the members of a group. In other words, a push-to-talk service is a walkie-talkie communication for mobile phones. As in a walkie-talkie communication only one participant has the right to send at a time, whereas the other participants only receive. However, communication is not limited as with walkie-talkies, but works within the whole mobile phone network. The user of the PTT service has to define a list (buddy list) with one or more users. Then he may push a PTT-key on his terminal and talk to the selected users. If one of the users is unable to accept direct speech, the voice message is directed into the mailbox of that particular user.

During a push-to-talk connection outputting direct speech without prior warning to a user could be impolite or disturbing for other people, especially in business areas. Therefore, it would be advantageous, if the user had the opportunity to choose whether to accept a call or not.

### Object of the invention

It is the object of the invention to provide a method of communicating by means of direct speech between the user terminals of two or more users of a push-to-talk service via a network allowing the user a higher flexibility in choosing how to deal with an incoming call.

### Short description of the invention

This object is achieved by a method of communicating by means of direct speech between the user terminals of two or more users of a push-two-talk service via a network, wherein the user of a first terminal pushes a key and inputs speech, i.e. talks into the microphone of his user terminal, to be transmitted to at least one addressed terminal using the push-to-talk service, wherein a text notification about an incoming call is transmitted to at least one addressed user terminal using the push-to-talk service if speech is inputted into the first user terminal. The text notification maybe accompanied by a visual, acoustic or haptic signal. Preferably, the text notification consists in a text message related to the inputted speech. Thus, the user may be informed about the subject of the incoming message and/or the user sending the message etc. Hence, the user of an addressed user terminal is notified immediately about an incoming call, however, the speech is not outputted immediately. Thus, the outputted direct speech being impolite or disturbing can be avoided. The user can decide how to deal with the incoming call. The network used for the push-to-talk service may be any network, in particular a telecommunications network and/or a network using internet protocol (IP) addressing. An addressed terminal is p. ex. a terminal of a list selected by one of the users of the PTT service.

In a preferred variant of the method the speech inputted into the first user terminal is at least partially converted into text and the text and/or a text identification, i.e. information about the content or the sender of the speech message, is transmitted as text notification to at least one addressed terminal. Hence, the text notification can contain information about the content of the speech message. Thus, it is easier for the user of an addressed user terminal to evaluate the importance of the speech message and whether to accept the speech message immediately or not. For example, the speech message may contain at its beginning information about the content/topic of the speech message. If the beginning of the speech message is converted into text and transmitted as text to the addressed user terminal, the user of the addressed terminal can make an informed decision based on the information of the text message.

Advantageously, the information about the use of a terminal being willing and/or able to accept direct speech is stored in a presence server and direct speech is only directed to the addressed user terminal if in the presence server the addressed user terminal is declared as willing and/or able to accept direct speech. Thus, if a terminal is declared as willing and/or able to accept direct speech the direct speech is sent directly to the addressed user terminal. In this case the conversion of the speech message into a text message may be avoided.

Preferably, the presence server detects from status parameters of a user terminal whether the user of the terminal is willing and/or able to accept direct speech. For example, if the loudspeaker of a user terminal is turned off, this is indicative for the user terminal not being able to accept direct speech and the terminal is declared unable to accept direct speech. If the presence server detects that the loudspeaker of a user terminal has been turned off, a text notification may be sent to the user terminal if a speech message is to be delivered to the user terminal and the user has the opportunity to turn on the loudspeaker, if he wishes to accept the direct speech message.

In a preferred embodiment of the method the text notification is only transmitted to terminals declared as being unwilling and/or unable to accept direct speech. Thus, the push-to-talk service is easier to handle for users accepting direct speech. Those users do not have to explicitly confirm each time that they accept an incoming direct speech call. This is less disturbing for the users than having to accept a direct speech call each time. However, if an addressed user terminal has been declared as being unwilling and/or unable to accept direct speech, the user still gets the opportunity to accept, for example very important speech messages, since he is notified about the speech messages.

If the speech-to-text conversion is only performed if in the presence server at least one addressed terminal is declared as unwilling and/or unable to accept direct speech, unnecessary speech-to-text conversion is avoided. This means that speech-to-text conversion is only performed on demand.

In a further variant of the inventive method the speech inputted into the first user terminal is redirected to an automated speech-to-text converter if in the presence server at least one addressed terminal is declared as unwilling and/or unable to accept direct speech. Thus, only one or few converters are needed in the push-to-talk service system. The user terminals do not have to comprise a speech-to-text converter. This means, that the push-to-talk system checks with the presence server if an addressed user or addressed user terminal respectively accepts direct speech. If the answer is yes, the speech message is sent directly to the addressed user terminal. If the answer is no, the speech message is redirected to a speech-to-text converter, where a notification, in particular a text message related to the speech message, is generated and the notification is sent to the addressed user terminal. The speech message is only sent to the addressed user terminal, if the user explicitly accepts the speech message.

In a particularly preferred embodiment the text notification is indicated on the addressed user terminal and the user decides whether to accept, forward or reject the direct speech. For example, a text message may be displayed on the addressed user terminal. The arrival of the text notification may be accompanied by a visual, haptic, e.g. vibrational, or acoustic signal. Thus, the user is informed that a direct speech message has been sent and also, via the text message, the user maybe informed about the content or subject of the direct speech message. Then the user chooses among several options, how to deal with the direct speech message.

The object is also achieved by a push-to-talk system comprising at least two user terminals capable of communicating direct speech via a network, comprising a push-to-talk application server, wherein an automated speech recognition system is provided for converting speech inputted into one terminal at least partially into text. The text may be transmitted to an addressed user terminal. By converting the speech message entirely or in part into text, the user of the addressed user terminal receives a preliminary information about the content or the subject of the speech message. This allows the user of the addressed user terminal to decide and to choose, how to proceed.

In a preferred embodiment the speech recognition system communicates with a presence server containing information about user terminals being able and/or willing to accept direct speech and only converts the speech inputted into the first terminal into text if in the presence server at least one addressed user terminal, i.e. a user terminal associated with the same group or list of users using the push-to-talk service as the first user terminal, is declared as unable and/or unwilling to accept direct speech. Thus, text is only generated on demand.

The presence server has information about a user terminal or a user being able and/or willing to accept direct speech. This implies that if a user terminal is not declared as able and/or willing to accept direct speech, the presence server also has information about a terminal being unable and/or unwilling to accept direct speech. The presence server may derive the information whether a particular user terminal is able or willing to accept direct speech or not from status parameters of the user terminal or be given this information by the user terminal. For example, if the loudspeaker of a terminal is turned off, the presence server may be notified that no direct speech will be accepted. In case of direct speech not being accepted, an incoming call is redirected to the speech recognition system and translated into text. The text or a text identification will be sent to the addressed user terminal for confirmation etc. Standard indication may be used to inform the addressed user. The addressed user can either accept, transfer or reject the call. Hence, the notification about an incoming call without the need to accept direct speech is possible with the inventive push-to-talk system.

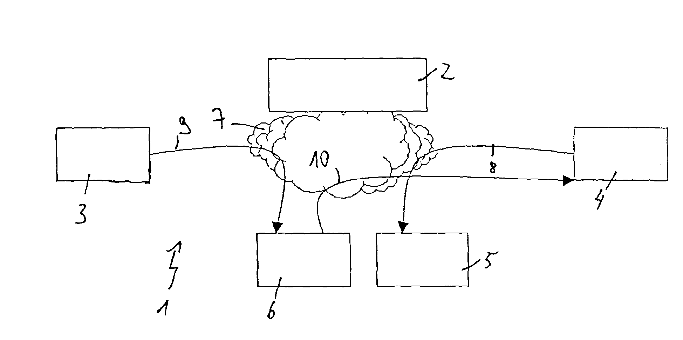

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing. A schematic diagram of a push-to-talk system is shown in the only figure.

The figure shows a push-to-talk system 1 offering a push-to-talk (PTT) service comprising an application server 2, user terminals 3, 4 as clients, a presence server 5 providing availability information, and a speech recognition systems 6 comprising a speech to text converter. Communication between the different elements of the push-to-talk system 1 occurs via a network 7, wherein IP addressing is used. Users of the PTT service may use a group and list management server (not shown) to manage groups and lists (e.g. contact and access lists) that are needed for the PTT service. The group and list management server provides list management operations to create, modify, retrieve and delete groups and lists as well as storage for groups and lists.

In the embodiment shown the user of the user terminal 3 wants to transmit speech to the user of the user terminal 4. However, the speech is transmitted to the user terminal 4 dependent on presence and privacy information, for example, if a loudspeaker of the user terminal 4 is off, the user terminal 4 signals to the presence server 5 that no direct speech will be accepted. This is indicated by arrow 8. Hence, the speech from the user terminal 3 is redirected to the speech recognition system 6 and translated into text. The text or a text identification is sent to the addressed user terminal 4 for confirmation, etc. This process is indicated by arrows 9 and 10. Standard indication is used to inform the user of the user terminal 4 of the incoming call. The user of the user terminal 4 can decide whether to accept the speech message, to transfer it or to reject it.

The invention relates to a method for communicating by means of direct speech between the user terminals of two or several users of a push-to-talk service over a telecommunications and/or IP network, wherein information about whether a user is willing and/or able to accept direct speech is stored in a presence server. Direct speech is only directed to an addressed user terminal if in the presence server the addressed user terminal is declared as willing and/or able to accept direct speech. Direct speech is redirected to a speech recognition system if in the presence server the addressed user terminal is not declared as willing and/or able to accept direct speech. In the speech recognition system the direct speech is translated into text and a text identification comprising the text is sent to the addressed user terminal. A text identification sent from the speech recognition system to the addressed user is indicated/displayed on the user terminal of the addressed user and said user can decide whether to accept, forward or reject the direct speech.

## Claims

1. Method of communicating by means of direct speech between the user terminals (3, 4) of two or more users of a push-to-talk service via a network (7), wherein the user of a first terminal (3) pushes a key and inputs speech to be transmitted to at least one addressed terminal (4) using the push-to-talk service, **characterized in that** a text notification about an incoming call is transmitted to at least one addressed user terminal (4) using the push-to-talk service if speech is inputted into the first user terminal (3).

2. Method according to claim 1, **characterized in that** the speech inputted into the first user terminal (3) is at least partially converted into text and the text or a text identification is transmitted as text notification to at least one addressed terminal (4).

3. Method according to claim 1, **characterized in that** information about a user of a terminal (3, 4) being willing and/or able to accept direct speech is stored in a presence server (5) and direct speech is only directed to the addressed user terminal (4) if in the presence server (5) the addressed user terminal (4) is declared as willing and/or able to accept direct speech.

4. Method according to claim 3, **characterized in that** the presence server (5) detects from status parameters of a user terminal (3, 4) whether the user of the terminal (3, 4) is willing and/or able to accept direct speech.

5. Method according to claim 3, **characterized in that** the text notification is only transmitted to terminals (3, 4) declared as being unwilling and/or unable to accept direct speech.

6. Method according to claim 3, **characterized in that** the speech to text conversion is only performed if in the presence server (5) at least one addressed terminal (4) is declared as unwilling and/or unable to accept direct speech.

7. Method according to claim 2, **characterized in that** speech inputted into the first user terminal (3) is redirected to an automated speech to text converter if in the presence server (5) at least one addressed terminal (4) is declared as unwilling and/or unable to accept direct speech.

8. Method according to claim 1, **characterized in that** the text notification is indicated on the addressed user terminal (4) and the user decides whether to accept, forward or reject the direct speech.

9. Push-to-talk system (1) comprising at least two user terminals (3, 4) capable of communicating direct speech via a network (7), comprising a push-to-talk application server (2), **characterized in that** an automated speech recognition system (6) is provided for converting speech inputted into a first terminal (3) at least partially into text.

10. Push to talk system according to claim 9, **characterized in that** the speech recognition system (6) communicates with a presence server (5) containing information about user terminals (3, 4) being able and/or willing to accept direct speech and only converts the text inputted into the first terminal into text if in the presence server (5) at least one addressed user terminal is declared as unable and/or unwilling to accept direct speech.
